# EUROPEAN PATENT SPECIFICATION

(11) **EP 3 787 885 B1**
(45) Date of publication and mention of the grant of the patent: **16.02.2022**
(21) Application number: 19722507.1
(22) Date of filing: 30.04.2019
(51) Int. Cl.: B29C 70/46, B29D 99/00

(54) **METHOD FOR MAKING A SHEAR WEB FLANGE**
VERFAHREN ZUR HERSTELLUNG EINES SCHERBAHNFLANSCHES
PROCÉDÉ POUR FABRICATION D'UNE BRIDE D'ÂME DE CISAILLEMENT

(30) Priority: 02.05.2018 DK PA201870261
(43) Date of publication of application: 10.03.2021
(73) Proprietor: VESTAS WIND SYSTEMS A/S, 8200 Aarhus N (DK)
(72) Inventor: RANDALL, Stephen, Cowes PO31 7JY (GB)
(74) Representative: Vestas Patents Department
(86) International application number: PCT/DK2019/050133
(87) International publication number: WO 2019/210924

(56) References cited:
- EP-A1- 2 508 326
- EP-A2- 2 689 128
- EP-B1- 1 481 790
- WO-A1-2007/054088
- WO-A1-2016/177375
- CA-A1- 2 979 914
- US-A- 4 735 758
- US-A1- 2016 361 846

## Description

### Technical field

The present invention relates generally to wind turbine blades and more specifically to a method for making a flange of a shear web for a wind turbine blade

### Background

Modern wind turbine blades comprise an outer shell that defines the aerodynamic contour of the blade. One or more shear webs are typically arranged inside the outer shell. The shear webs are longitudinally-extending structures comprising a panel with upper and lower flanges extending along longitudinal edges of the panel. These flanges are used to bond the shear web to opposed spar caps, which may be integrated within the shell structure or bonded to an inner surface of the shell.

EP1481790 describes a skin-stringer structure for an airplane fuselage having a surface-plate portion made of composite material, and a reinforcement portion made of composite material provided on one-side-surface of the surface-plate portion and extended to one direction along the surface-plate portion. A method is described for making a T-shaped stringer on a pair of side presses.

An example of a known shear web flange is described in applicant's PCT application, WO2016/177375A1. The flange is T-shaped in cross-section and comprises an upstand extending transversely to the base. As described in this application, the use of premanufactured T-shaped flanges simplifies the manufacturing process of a shear web because it allows relatively simple shear web tooling and moulding processes to be used and further avoids the need for subsequent bonding of return flanges.

The T-shaped flanges described in WO2016/177375A1 are formed using a pultrusion process, in which resin-coated fibres are pulled through a T-shaped pultrusion die. The pultrusion process used to form the T-shaped flanges necessarily requires a significant proportion of the fibres to extend parallel to the length of the flanges (i.e. in the 0° direction). However, the 0° fibres in these pultruded flanges may in some cases impart an undesirably high level of longitudinal stiffness to the flanges. If the longitudinal stiffness of the flanges is too high, then a proportion of the bending loads may be carried by the flanges instead of by the spar caps.

It is therefore desirable to reduce or avoid the use of 0° fibres in the shear web flanges. However, as the pultrusion process necessarily requires 0° fibres, an alternative method of manufacturing the flanges is required.

Against this background the present invention has been developed.

### Summary of the invention

In a first aspect of the invention there is provided a method of making a laminated shear web flange for a wind turbine blade, the flange having a generally T-shaped cross-section comprising a base and an upstand. The method comprises: providing an elongate mould tool having first and second mould parts each defining a first surface and a second surface transverse to the first surface, the mould tool being moveable between open and closed configurations, wherein in the open configuration the first surfaces of the mould parts together define a primary surface of the mould tool, and the second surfaces define respective side surfaces of the mould tool transverse to the primary surface, and in the closed configuration the first surfaces are mutually opposed and define a slot therebetween; arranging plies of reinforcing fibres on the mould tool in the open configuration, the plies at least partially covering the primary surface and the side surfaces of the mould tool; closing the mould tool such that the plies supported on the primary surface now occupy the slot between the mould parts to form the upstand of the flange, and such that the plies supported on the second surfaces of the mould parts form the base of the flange; and integrating the plies with resin to form the flange.

The plies may be arranged on the mould tool such that a majority of the reinforcing fibres extend transversely to a longitudinal axis of the mould tool.

The step of closing the mould tool may comprise turning the first and/or second mould part. The step of closing the mould tool may further comprise turning both the first and second mould parts towards one another. For example, the first and second mould parts may each be rotated by approximately 90 degrees. The step of closing the mould tool may further comprise pivoting the first and or second mould parts about a hinge line extending along the primary surface of the mould tool.

The step of arranging the plies on the mould tool may comprise arranging at least one ply such that it extends across the hinge line. The plies supported on the primary surface of the mould tool in the open configuration may be folded in the slot when the mould tool is closed.

The step of arranging plies on the mould tool may comprise stacking a plurality of plies such that at least one ply covers at least part of the primary surface and is draped over at least one of the side surfaces of the mould tool. The step of arranging plies on the mould tool may comprise stacking a plurality of plies such that at least one ply extends across the full width of the primary surface and is draped over both side surfaces of the mould tool.

The step of arranging plies on the mould tool may comprise stacking a plurality of plies on the mould tool in the open configuration according to a required thickness of the flange.

A laminated shear web flange made according to the method described above may extend longitudinally between first and second ends and have a generally T-shaped cross section comprising a base and an upstand arranged transversely to the base.

The flange may be formed from a plurality of plies comprising reinforcing fibres, where a majority of the reinforcing fibres extend transversely to a longitudinal axis of the flange. The flange may be formed from a plurality of plies, where each ply forms at least part of both the base and the upstand of the flange.

An angle defined between the upstand and the base of the laminated shear web flange may vary along the length of the flange such that the angle may be different in different longitudinal sections of the flange.

An elongate mould tool may be provided for making a laminated shear web flange for a wind turbine blade. The mould tool comprises first and second mould parts each defining a first surface and a second surface transverse to the first surface. The mould tool is configured for relative movement between open and closed configurations. In the open configuration the first surfaces of the mould parts together define a primary surface of the mould tool, and the second surfaces define respective side surfaces of the mould tool transverse to the primary surface. In the closed configuration the first surfaces are mutually opposed and define a slot therebetween.

The elongate mould tool may comprise a hinge connecting the first and second mould tools, such that a hinge line extends along the primary surface when the mould tool is open. The slot of the elongate mould tool may comprise an open end and a closed end and the slot may taper in width moving from the open end to the closed end. The first and second surfaces of the first and/or second mould parts of the elongate mould tool may define an angle therebetween, said angle may be different in different longitudinal sections of the mould tool.

For the avoidance of doubt the terms 'transverse' and 'transversely' as used herein should be interpreted to mean non-parallel. These terms therefore are intended to include angles such as 90 degrees and +/- 45 degrees, but are not limited to these angles.

### Brief description of the drawings

The present invention will now be described in further detail by way of nonlimiting example only with reference to the following figures in which:
Figure 1 is an exploded view of a wind turbine blade;
Figure 2 is a schematic cross-sectional view of a wind turbine blade;
Figure 3 is a perspective view of a shear web flange according to an embodiment of the present invention;
Figure 4 is a schematic perspective view of a mould tool in an open configuration;
Figure 5 is a schematic cross-sectional view of the mould tool showing a plurality of plies assembled on the mould tool in the open configuration;
Figure 6 shows the mould tool being moved towards a closed configuration;
Figure 7 shows the mould tool in the closed configuration whereby the plies are formed into a part having a T-shaped cross-section;
Figure 8 is a schematic cross-sectional view of a laminated shear web flange produced using the mould tool;
Figure 9 is a further schematic cross-sectional view of a mould tool in a closed configuration and shaped to form an angled section of the flange; and
Figure 10 is a schematic cross-sectional view of an angled T-section flange produced using the mould tool shown in Figure 9.

### Detailed description

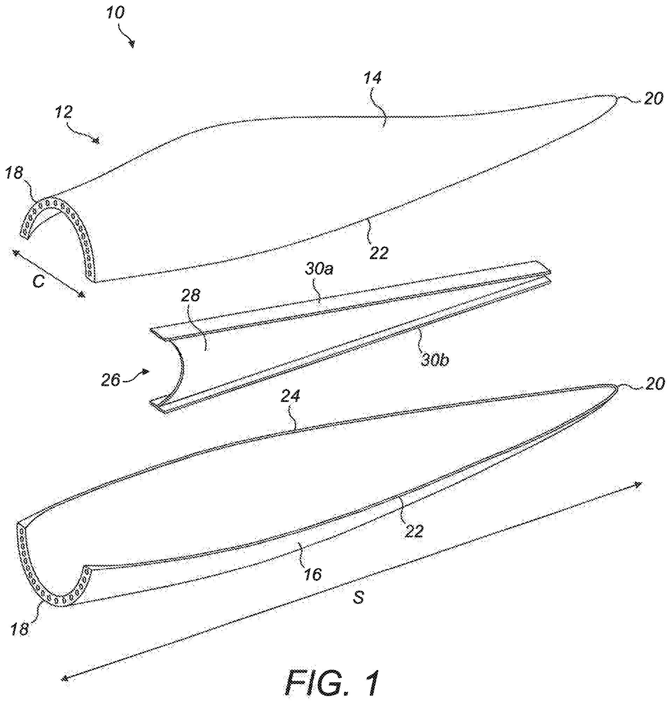

Figure 1 is an exploded view of a wind turbine blade 10. The blade comprises an outer shell 12 of a composite construction and formed in two parts: a leeward half shell 14 and a windward half shell 16. The blade 10 extends in a spanwise direction (S) between a root 18 and a tip 20, and in a chordwise direction (C) between a leading edge 22 and a trailing edge 24. A shear web 26 is located inside the blade 10. The shear web 26 comprises a panel 28 and upper and lower flanges 30a, 30b extending transverse to the panel 28 along longitudinal edges of the panel 28.

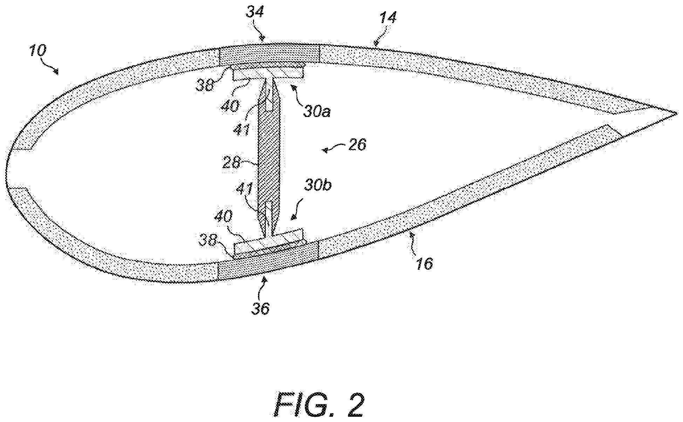

Figure 2 shows a cross-sectional view of the wind turbine blade 10. The blade 10 includes first and second spar caps 34, 36 integrated respectively in the leeward and windward half shells 14, 16. The upper and lower flanges 30a, 30b of the shear web 26 are bonded respectively to the first and second spar caps 34, 36 by means of adhesive 38. The shear web flanges 30a, 30b are substantially T-shaped in cross-section and comprise a base 40 and an upstand 41 arranged transversely to the base 40. The upstand 41 is integrated with the shear web panel 28, whilst the base 40 is bonded to a spar cap 34 or 36.

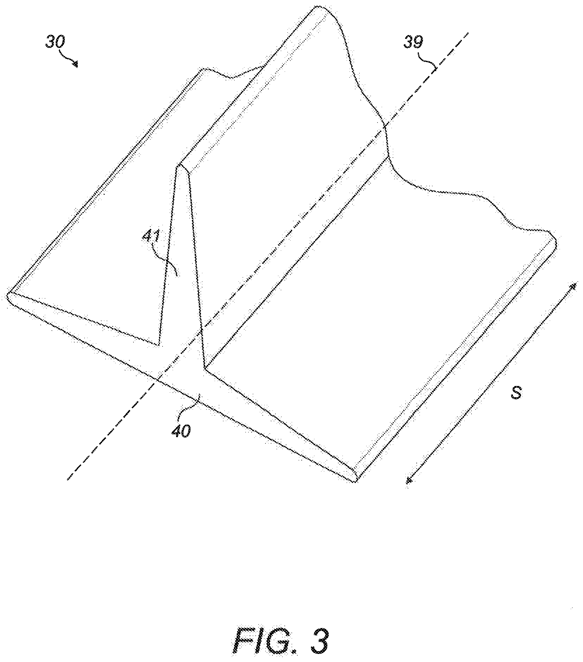

Figure 3 is a perspective view of a portion of a shear web flange 30 according to an embodiment of the present invention. The shear web flange 30 may be an upper flange 30a or a lower flange 30b as shown in Figures 1 and 2. As shown in Figure 3, the flange 30 is elongate and extends in the spanwise direction (S). A longitudinal axis 39 of the flange 30 is indicated in Figure 3. As shown in Figure 3, the shear web flange 30 is substantially T-shaped in cross-section and comprises a base 40 and an upstand 41 arranged transversely to the base 40.

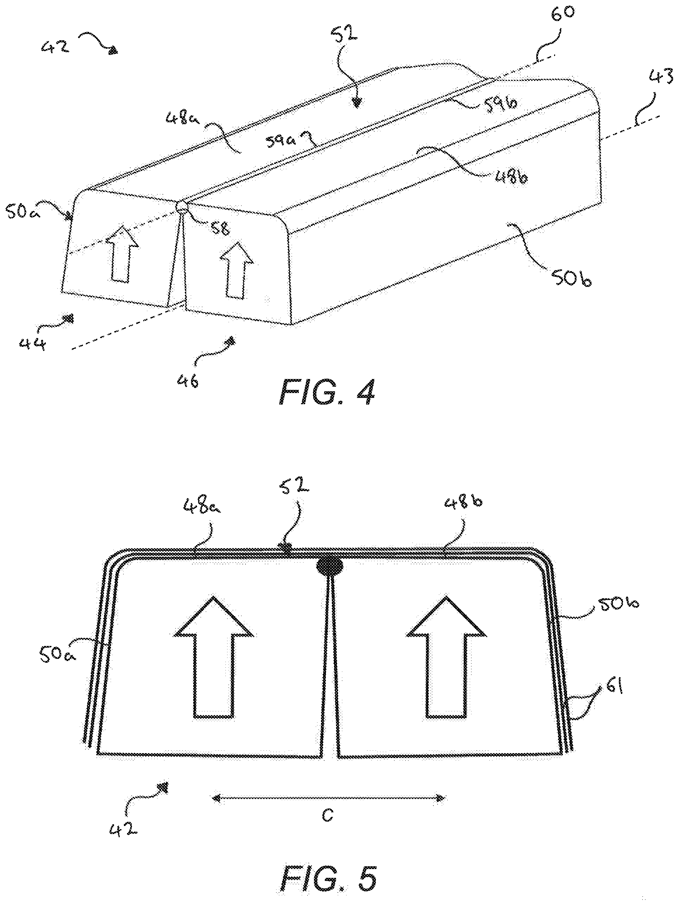

In contrast to the pultruded flanges of the prior art, the T-shaped flange 30 shown in Figure 3 is of a laminate construction and is formed in a novel moulding process as will now be described with reference to Figures 4 to 7.

Referring to Figure 4, this shows a schematic perspective view of a mould tool 42 for making a shear web flange 30. The mould tool 42 is elongate and extends along a longitudinal axis 43.

The mould tool 42 comprises first and second mould parts 44, 46 arranged side-by-side. The first and second mould parts 44, 46 each comprise a first surface 48a, 48b and a second surface 50a, 50b transverse to the first surface 48a, 48b. The mould tool 42 is shown in an open configuration in which the first surfaces 48a, 48b of the mould parts 44, 46 together define a primary surface 52 of the mould tool 42, and the second surfaces 50a, 50b define respective side surfaces of the mould tool 42 transverse to the primary surface 52.

In this example, the first and second mould parts 44, 46 are connected via a hinge 58. The hinge 58 is provided between longitudinal edges 59a, 59b of the respective first surfaces 48a, 48b of the mould parts 44, 46. Accordingly, a hinge line 60 extends longitudinally along the primary surface 52 of the mould tool 42.

Referring to Figure 5, this shows a plurality of plies 61 arranged on the mould tool 42. The plies 61 comprise reinforcing fibres such as glass fibres or carbon fibres. The plies 61 may be dry or comprise partially cured resin, e.g. pre-preg or semipreg. The fibres may be stitched or woven. Any suitable structural fabrics suitable for use in composite moulding techniques may be used. Preferably in this example the plies 61 comprise biaxial fabric, which comprises fibres arranged at relative orientations of +/- 45°. The plies 61 are preferably arranged such that the fibres extend transversely to the longitudinal axis 43 (see Figure 4) of the mould tool 42, most preferably at +/-45° to the longitudinal axis 43. Accordingly, in this example, none of the fibres extend parallel to the longitudinal axis 43 of the mould tool 42. If fabric comprising 0° fibres is used (e.g. Triaxial fabric), it is preferable that the fabric contains a low proportion of 0° fibres such that the majority of fibres still extend transverse to the longitudinal axis 43. The longitudinal stiffness of the resulting flange 30 is therefore advantageously minimised.

The plies 61 are arranged, e.g. stacked, one on top of another on the mould tool 42 to form a plurality of laminate layers. Any suitable number of plies 61 may be stacked depending on a desired thickness and/or strength of the flange 30. If desired, a different number of plies 61 may be used in different longitudinal sections of the mould tool 42 to produce a flange 30 having a variable thickness along its length. The plies 61 may either be stacked individually on the tool 42, or alternatively the plies 61 may be stacked offline and a stack of plies transferred to the tool 42.

In this example each ply 61 extends across the full width of the primary surface 52 of the mould tool 42 and is draped over sides 50a, 50b of the mould tool 42. This facilitates the layup process and minimises the number of fabric sections required to form the flange 30. However, in other examples multiple plies 61 could be used to form each layer of the laminate if desired. For example, the plies 61 arranged on the mould tool 42 may not each extend across the hinge line 60, i.e. the plies 61 may be discontinuous in the chordwise direction (C). Therefore separate plies 61 may be used on each of the first and second mould parts 44, 46 resulting in a shear web flange 30 comprising plies 61 which are discontinuous on either side of the upstand 41.

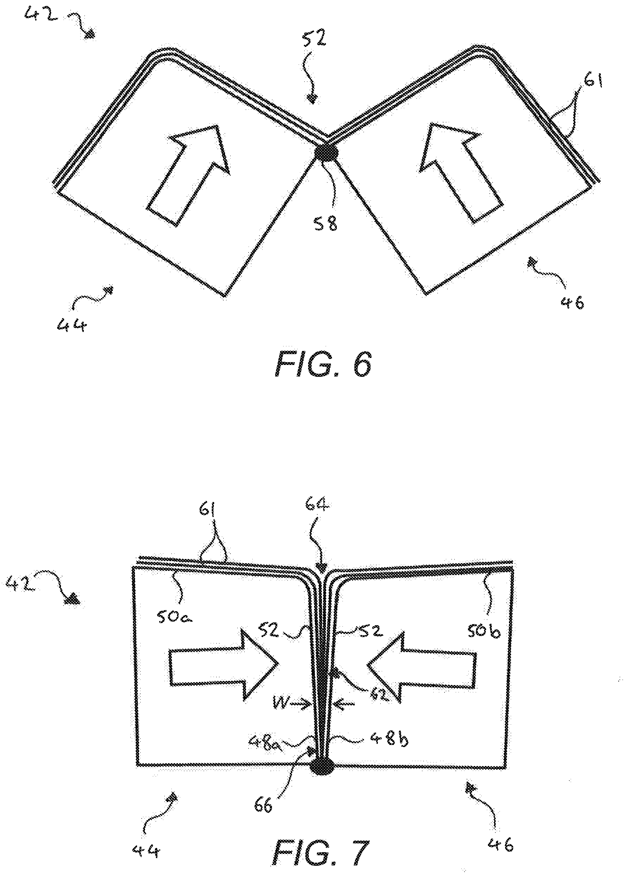

Referring now to Figure 6, this shows the mould tool 42 being moved towards a closed configuration. In this example, closing the mould tool 42 involves pivoting the first and second mould parts 44, 46 towards each other about the hinge line 60 (see Figure 4). As the plies 61 extend across the hinge line 60 in this example, closing the mould tool 42 causes the plies 61 supported on the primary surface 52 to fold along the hinge line 60.

Referring to Figure 7, this shows the mould tool 42 in its closed configuration. It will be appreciated that both of the mould parts 44, 46 have been rotated by approximately 90° in comparison to the open configuration shown in Figure 4. In particular, the first mould part 44 has been rotated 90° in a clockwise direction about the hinge line 60 and the second mould part 46 has been rotated 90° in an anticlockwise direction about the hinge line 60. It is anticipated that other combinations of relative movement between the mould parts 44, 46 are also possible. For example, the object of the invention may also be achieved by rotating either one of the mould parts 44 or 46 by approximately 180°, whilst maintaining the other of the mould parts 44 or 46 stationary in its original position.

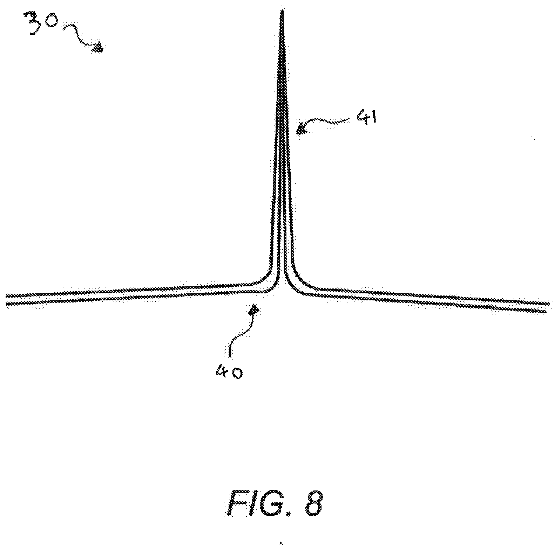

As shown in Figure 7, in the closed configuration the first surfaces 48a, 48b of the respective mould parts 44, 46 are mutually opposed and define a slot 62 therebetween. The slot 62 comprises an open end 64 and a closed end 66 and tapers in width (W) moving from the open end 64 to the closed end 66. The plies 61 supported on the primary surface 52 of the mould tool 42 now occupy the slot 62 to form the upstand 41 of the flange 30 (shown in Figures 3 and 8). The plies 61 supported on the second surfaces 50a, 50b of the respective mould parts 44 and 46 form the base 40 of the flange 30. In the closed configuration, the mould tool 42 therefore defines a T-shaped mould surface.

Once the mould tool 42 has been closed, the part 30 can be cured in the case of pre-preg plies 61. Alternatively, if dry plies 61 are used, a resin may be admitted to the mould tool 42 prior to the curing process. For example a resin infusion process may be used in which the plies 61 are covered with a vacuum bag (not shown) which is sealed against the mould tool 42 to form a sealed region enclosing the plies 61. Air is then removed from the sealed region and resin is admitted to the sealed region. The resin infuses the plies 61 and is subsequently cured to form the finished part 30.

Once the resin has cured, the moulding process is complete and the final part 30, which is shown in Figure 8, may be removed from the mould tool 42. Following removal from the mould tool 42, excess cured material may be removed from the top of the upstand 41 of the shear web flange 30 if necessary.

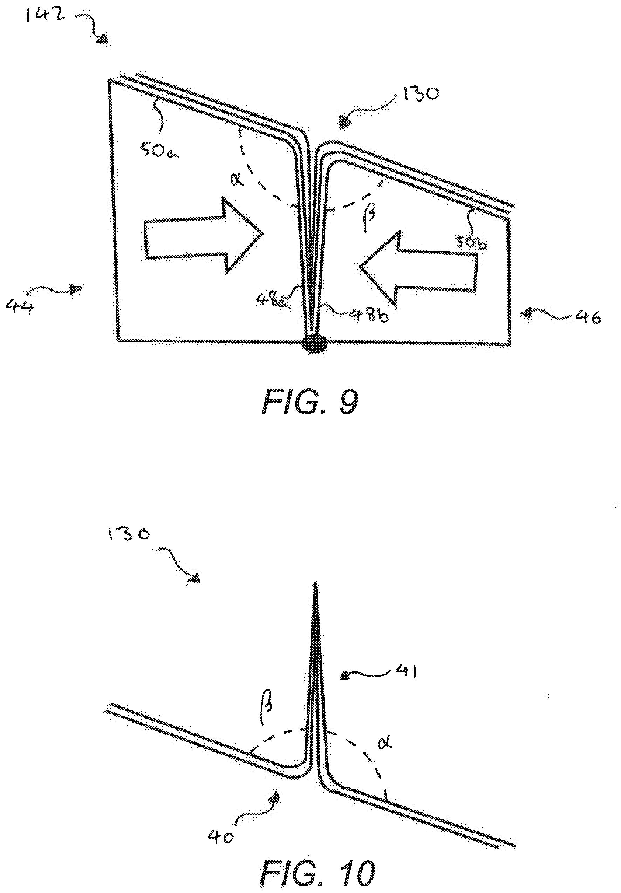

Figure 9 shows a mould tool 142 in a closed configuration. The mould tool 142 of Figure 9 is similar to the mould tool 42 previously described, however it is configured to form an angled T-shaped flange 130 (shown in Figure 10). As indicated in Figure 9, the first and second surfaces 48a, 50a of the first mould part 44 define a first angle (α) therebetween. The first and second surfaces 48b, 50b of the second mould part 46 define a second angle (β) therebetween. In comparison to the mould tool 42 shown in Figure 7, it will be appreciated that the first angle (α) is greater than the equivalent angle in Figure 7, whilst the second angle (β) is less than the equivalent angle in Figure 7. Accordingly, when the mould tool 142 is closed as shown in Figure 9, the respective second surfaces 50a, 50b of the mould parts 44, 46 are angled differently to the second surfaces 50a, 50b of the mould tool 42 shown in Figure 7. In other embodiments, the angles α and β may have any suitable values according to a desired geometry of the flange 30, 130.

Figure 10 shows the T-shaped flange 130 formed using the mould tool 142 of Figure 9. It can be seen that the base 40 of the flange 130 is inclined relative to the upstand 41 by an angle α on one side and an angle β on the other side. This may be contrasted with the flange 30 shown in Figure 8, in which the base 40 of the flange 30 is essentially perpendicular to the upstand 41, hence the equivalent angles in Figure 8 are approximately 90 degrees. The angled flange 130 shown in Figure 10 is suitable for accommodating blade twist, and may be fixed to inclined portions of the blade shell 12.

The mould tool 142 shown in Figure 9 may be a separate mould tool to the mould tool 42 shown in Figures 4 to 7. Alternatively, a single mould tool 42 may be shaped differently in different longitudinal sections of the mould tool 42. For example, a mould tool 42 may have a cross-section as shown in Figure 7 in a first longitudinal portion and a cross-section as shown in Figure 9 in a second longitudinal portion. As such, the angle defined between the first surfaces 48a, 48b and the second surfaces 50a, 50b of the first and/or second mould parts 44, 46 may be different in different longitudinal sections of the mould tool 42. This advantageously allows a T-shaped flange 130 to be produced in which the angle defined between the upstand 41 and the base 40 varies along the length of the flange 130 such that the angle is different in different longitudinal sections of the flange 130. A T-shaped flange 130 designed to accommodate blade twist may therefore be produced in a single moulding operation.

The mould tool 42, 142 provides a simple and effective means of making laminated T-shaped flanges 30, 130. It will be appreciated that the mould tool 42, 142 in its open configuration allows a straightforward layup procedure whereby plies 61 may be arranged on a substantially flat surface. The layup process may therefore be performed rapidly and accurately and allows for a high level of control over the fibre direction. In contrast to pultrusion processes, which necessarily require 0° fibres extending parallel to the longitudinal axis 39 of the flanges 30, 130, the present method allows 0° fibres to be eliminated. The resulting laminated flanges 30, 130 may therefore be formed with fibres extending only in transverse directions, for example +/- 45 degrees to the longitudinal axis 39, which is highly advantageous because it minimises the longitudinal stiffness of the flange 30, 130 whilst maximising the transverse stiffness. The novel mould tooling 42, 142 also allows flanges 30, 130 to be made that have a varying thickness and/or angle along their length such that the flanges 30, 130 may accommodate blade twist and have optimal structural properties.

## Claims

1. A method of making a laminated shear web flange (30) for a wind turbine blade (10), the flange having a generally T-shaped cross-section comprising a base (40) and an upstand (41), and the method comprising:
- providing an elongate mould tool (42) having first and second mould parts (44, 46) each defining a first surface (48a, 48b) and a second surface (50a, 50b) transverse to the first surface, the mould tool being moveable between open and closed configurations, wherein in the open configuration the first surfaces of the mould parts together define a primary surface (52) of the mould tool, and the second surfaces define respective side surfaces of the mould tool transverse to the primary surface, and in the closed configuration the first surfaces are mutually opposed and define a slot (62) therebetween;
- arranging plies (61) of reinforcing fibres on the mould tool (42) in the open configuration, the plies at least partially covering the primary surface and the side surfaces of the mould tool;
- closing the mould tool (42) such that the plies supported on the primary surface now occupy the slot between the mould parts to form the upstand (41) of the flange (30), and such that the plies supported on the second surfaces of the mould parts form the base (40) of the flange; and
- integrating the plies with resin to form the flange.

2. The method of Claim 1, wherein the plies (61) are arranged on the mould tool (42) such that a majority of the reinforcing fibres extend transversely to a longitudinal axis of the mould tool.

3. The method of Claim 1 or Claim 2, wherein the step of closing the mould tool (42) comprises turning the first and/or second mould part (44, 46).

4. The method of any preceding claim, wherein the step of closing the mould tool (42) comprises turning both the first and second mould parts (44, 46) approximately 90 degrees towards one another.

5. The method of any preceding claim, wherein the step of closing the mould tool (42) comprises pivoting the first and or second mould parts (44, 46) about a hinge line (60) extending along the primary surface of the mould tool.

6. The method of Claim 5, wherein the step of arranging the plies (61) on the mould tool (42) comprises arranging at least one ply such that it extends across the hinge line (60).

7. The method of any preceding claim, wherein the plies (61) supported on the primary surface (52) of the mould tool in the open configuration are folded in the slot (62) when the mould tool is closed.

8. The method of any preceding claim, wherein the step of arranging plies (61) on the mould tool comprises stacking a plurality of plies such that at least one ply covers at least part of the primary surface (52) and is draped over at least one of the side surfaces of the mould tool.

9. The method of any preceding claim, wherein the step of arranging plies (61) on the mould tool comprises stacking a plurality of plies such that at least one ply extends across the full width of the primary surface (52) and is draped over both side surfaces of the mould tool.

10. The method of any preceding claim wherein the step of arranging plies (61) on the mould tool comprises stacking a plurality of plies on the mould tool (42) in the open configuration according to a required thickness of the flange.

## Patentansprüche

1. Verfahren zur Herstellung eines laminierten Scherstegflansches (30) für ein Windkraftanlagenblatt (10), wobei der Flansch einen allgemein T-förmigen Querschnitt aufweist, der eine Basis (40) und eine Aufkantung (41) umfasst, und das Verfahren umfasst:
- Bereitstellen eines länglichen Formwerkzeugs (42) mit ersten und zweiten Formteilen (44, 46), die jeweils eine erste Oberfläche (48a, 48b) und eine zweite Oberfläche (50a, 50b) quer zur ersten Oberfläche definieren, wobei das Formwerkzeug zwischen einer offenen und einer geschlossenen Konfiguration bewegbar ist, wobei in der offenen Konfiguration die ersten Oberflächen der Formteile zusammen eine Hauptoberfläche (52) des Formwerkzeugs definieren und die zweiten Oberflächen jeweilige Seitenoberflächen des Formwerkzeugs quer zu der Hauptoberfläche definieren, und in der geschlossenen Konfiguration die ersten Oberflächen einander gegenüberliegen und einen Schlitz (62) dazwischen definieren;
- Anordnen von Lagen (61) aus Verstärkungsfasern auf dem Formwerkzeug (42) in der offenen Konfiguration, wobei die Lagen zumindest teilweise die Hauptoberfläche und die Seitenoberflächen des Formwerkzeugs bedecken;
- Schließen des Formwerkzeugs (42) auf derartige Weise, dass die auf der ersten Oberfläche aufliegenden Lagen nun den Schlitz zwischen den Formteilen einnehmen, um die Aufkantung (41) des Flansches (30) zu bilden, und auf derartige Weise, dass die auf den zweiten Oberflächen der Formteile aufliegenden Lagen die Basis (40) des Flansches bilden; und Integrieren der Lagen mit Harz zur Bildung des Flansches.

2. Verfahren nach Anspruch 1, wobei die Lagen (61) auf derartige Weise auf dem Formwerkzeug (42) angeordnet sind, dass sich ein Großteil der Verstärkungsfasern quer zu einer Längsachse des Formwerkzeugs erstreckt.

3. Verfahren nach Anspruch 1 oder Anspruch 2, wobei der Schritt des Schließens des Formwerkzeugs (42) das Drehen des ersten und/oder zweiten Formteils (44, 46) umfasst.

4. Verfahren nach einem der vorstehenden Ansprüche, wobei der Schritt des Schließens des Formwerkzeugs (42) das Drehen sowohl des ersten als auch des zweiten Formteils (44, 46) um etwa 90 Grad zueinander umfasst.

5. Verfahren nach einem der vorstehenden Ansprüche, wobei der Schritt des Schließens des Formwerkzeugs (42) das Schwenken des ersten und/oder zweiten Formteils (44, 46) um eine Scharnierlinie (60) umfasst, die sich entlang der Hauptoberfläche des Formwerkzeugs erstreckt.

6. Verfahren nach Anspruch 5, wobei der Schritt des Anordnens der Lagen (61) auf dem Formwerkzeug (42) das Anordnen mindestens einer Lage auf derartige Weise umfasst, dass sie sich über die Scharnierlinie (60) erstreckt.

7. Verfahren nach einem der vorstehenden Ansprüche, wobei die Lagen (61), die in der offenen Konfiguration auf der Hauptoberfläche (52) des Formwerkzeugs aufliegen, in den Schlitz (62) gefaltet werden, wenn das Formwerkzeug geschlossen wird.

8. Verfahren nach einem der vorstehenden Ansprüche, wobei der Schritt des Anordnens von Lagen (61) auf dem Formwerkzeug das Stapeln einer Vielzahl von Lagen auf derartige Weise umfasst, dass mindestens eine Lage mindestens einen Teil der Hauptoberfläche (52) bedeckt und über mindestens eine der Seitenoberflächen des Formwerkzeugs drapiert ist.

9. Verfahren nach einem der vorstehenden Ansprüche, wobei der Schritt des Anordnens von Lagen (61) auf dem Formwerkzeug das Stapeln einer Vielzahl von Lagen auf derartige Weise umfasst, dass sich mindestens eine Lage über die gesamte Breite der Hauptoberfläche (52) erstreckt und über beide Seitenoberflächen des Formwerkzeugs drapiert ist.

10. Verfahren nach einem der vorstehenden Ansprüche, wobei der Schritt des Anordnens von Lagen (61) auf dem Formwerkzeug das Stapeln einer Vielzahl von Lagen auf dem Formwerkzeug (42) in der offenen Konfiguration entsprechend einer erforderlichen Dicke des Flansches umfasst.

## Revendications

1. Procédé de fabrication d'une bride de toile de cisaillement stratifiée (30) pour une pale d'éolienne (10), la bride présentant une section transversale de forme généralement en T comprenant une base (40) et un montant (41), et le procédé comprenant :
- la fourniture d'un outil de moule allongé (42) présentant des première et seconde parties de moule (44, 46) définissant chacune une première surface (48a, 48b) et une seconde surface (50a, 50b) transversale par rapport à la première surface, l'outil de moule étant mobile entre des configurations ouverte et fermée, dans lequel, dans la configuration ouverte, les premières surfaces des parties de moule définissent ensemble une surface primaire (52) de l'outil de moule, et les secondes surfaces définissent des surfaces latérales respectives de l'outil de moule transversales par rapport à la surface primaire, et dans la configuration fermée, les premières surfaces sont mutuellement opposées et définissent une fente (62) entre celles-ci ;
- l'agencement de couches (61) de fibres de renforcement sur l'outil de moule (42) dans la configuration ouverte, les couches recouvrant au moins partiellement la surface primaire et les surfaces latérales de l'outil de moule ;
- la fermeture de l'outil de moule (42) de sorte que les couches soutenues sur la surface primaire occupent désormais la fente entre les parties de moule pour former le montant (41) de la bride (30), et de sorte que les couches soutenues sur les secondes surfaces des parties de moule forment la base (40) de la bride ; et l'intégration de résine dans les couches pour former la bride.

2. Procédé selon la revendication 1, dans lequel les couches (61) sont agencées sur l'outil de moule (42) de sorte qu'une majorité des fibres de renforcement s'étendent transversalement par rapport à un axe longitudinal de l'outil de moule.

3. Procédé selon la revendication 1 ou la revendication 2, dans lequel l'étape de fermeture de l'outil de moule (42) comprend la rotation de la première et/ou de la seconde partie de moule (44, 46).

4. Procédé selon une quelconque revendication précédente, dans lequel l'étape de fermeture de l'outil de moule (42) comprend la rotation à la fois des première et seconde parties de moule (44, 46) d'approximativement 90 degrés l'une vers l'autre.

5. Procédé selon une quelconque revendication précédente, dans lequel l'étape de fermeture de l'outil de moule (42) comprend la rotation des première et/ou seconde parties de moule (44, 46) autour d'une ligne de charnière (60) s'étendant le long de la surface primaire de l'outil de moule.

6. Procédé selon la revendication 5, dans lequel l'étape d'agencement des couches (61) sur l'outil de moule (42) comprend l'agencement d'au moins une couche de sorte qu'elle s'étende sur la ligne de charnière (60).

7. Procédé selon une quelconque revendication précédente, dans lequel les couches (61) soutenues sur la surface primaire (52) de l'outil de moule dans la configuration ouverte sont pliées dans la fente (62) lorsque l'outil de moule est fermé.

8. Procédé selon une quelconque revendication précédente, dans lequel l'étape d'agencement de couches (61) sur l'outil de moule comprend l'empilement d'une pluralité de couches de sorte qu'au moins une couche recouvre au moins une partie de la surface primaire (52) et soit drapée sur au moins une des surfaces latérales de l'outil de moule.

9. Procédé selon une quelconque revendication précédente, dans lequel l'étape d'agencement de couches (61) sur l'outil de moule comprend l'empilement d'une pluralité de couches de sorte qu'au moins une couche s'étende sur toute la largeur de la surface primaire (52) et soit drapée sur les deux surfaces latérales de l'outil de moule.

10. Procédé selon une quelconque revendication précédente, dans lequel l'étape d'agencement de couches (61) sur l'outil de moule comprend l'empilement d'une pluralité de couches sur l'outil de moule (42) dans la configuration ouverte selon une épaisseur requise de la bride.
